## Europäisches Patentamt
## European Patent Office
## Office européen des brevets

(19)

(11) Veröffentlichungsnummer: **0 109 926**
A2

(12) ## EUROPÄISCHE PATENTANMELDUNG

(21) Anmeldenummer: 83810464.4

(51) Int. Cl.³: **G 01 C 1/06**

(22) Anmeldetag: 07.10.83

(30) Priorität: 17.11.82 CH 6691/82

(43) Veröffentlichungstag der Anmeldung:
30.05.84 Patentblatt 84/22

(84) Benannte Vertragsstaaten:
DE GB SE

(71) Anmelder: KERN & CO. AG Werke für
Präzisionsmechanik Optik und Elektronik

CH-5001 Aarau(CH)

(72) Erfinder: Hauri, Bernhard
Birkenweg 312
CH-5053 Staffelbach(CH)

(72) Erfinder: Berner, Werner, Dr.
Sonnhalde 900
CH-5016 Ober-Erlinsbach(CH)

(72) Erfinder: Hoffmann, Dieter
Steinfeldstrasse 20
CH-5033 Buchs(CH)

(74) Vertreter: Seeger, Jan
c/o Kern & Co. AG
CH-5001 Aarau(CH)

(54) **Messsystem für ein Winkelmessgerät mit einem Höhenkreis und digitaler Messwertausgabe.**

(57) Bei einem Messsystem für ein Winkelmessgerät mit einem Höhenkreis (3) und digitaler Messwertausgabe, z.B. für einen Theodoliten, wird eine, durch die Geräteaufstellung bedingte unvermeidliche Stehachsschiefe kompensiert durch eine pendelnd aufgehängte Optik (15). Diese Optik (15) verschiebt den Strahlengang zur optischen Abbildung eines Bereiches (12) der Kreisteilung (6) auf den diametral gegenüberliegenden Teilungsbereich (13) bei Geräteverkippungen derart, dass sowohl der nach der Geräteaufstellung durch eine Nullmarkenkoinzidenz erzeugte Bezugspunkt als auch jede nachfolgende Höhenwinkelanzeige bezüglich einer vorhandenen oder sich nachträglich noch ändernden Geräteschiefe kompensiert sind.

FIG. 7

EP 0 109 926 A2

- 1 -

Messsystem für ein Winkelmessgerät mit einem Höhenkreis und digitaler

Messwertausgabe

Die Erfindung betrifft ein Messsystem für ein Winkelmessgerät mit einem Höhenkreis und digitaler Messwertausgabe.

Bei Höhenwinkelmessungen ist die Aufgabe bekannt, die Richtung eines Zielpunktes auf eine, durch die Richtung des örtlichen Schwerkraftvektors definierte Vertikalrichtung zu beziehen. Für diesen Zweck bekannte Theodolite mit digitaler Messwertausgabe (vgl. CH-PS 599 536 KERN) erzeugen zunächst auf eine geräteinterne Vertikale bezogene Vertikalwinkel-Werte. Diese Werte werden dann in einer Recheneinrichtung mit Hilfe von separat gemessenen Werten für den Horizontierungsfehler des Theodoliten korrigiert. Die geräteinterne Vertikale ist durch eine gerätefeste Nullmarkenfigur gegeben. Auf diese Figur wird eine Nullmarkenspur des Vertikalkreises des Theodoliten abgebildet. Nimmt das Zielfernrohr des Theodoliten die Richtung zum Gerätezenit hin ein, so koinzidiert das Nullmarkenbild des Kreises mit der gerätefesten Nullmarkenfigur, und es wird optoelektrisch ein Nullimpuls erzeugt. Der Horizontierungsfehler des Theodoliten wird mittels eines Flüssigkeitsspiegels ebenfalls optoelektrisch gemessen. Der Zenitwinkel des Zielfernrohrs wird dann aus dem digital ausgegebenen geräteinternen Vertikalwinkel und vorzeichenbehafteten Horizontierungsfehler als Korrektur in einem Microcomputer berechnet.

Bei Theodoliten mit visueller Teilkreisablesung über einen Abbildungsstrahlengang für die bezifferte Vertikalkreisteilung wird eine Stehachsschiefe kompensiert, indem man den Abbildungsstrahlengang über einen pendelnd oder schwimmend gelagerten Spiegel führt, derart, dass immer die auf die lokale Schwerkraftrichtung bezogene Vertikalrichtung des Zielfernrohres abgelesen wird (vgl. Theodolit DKM2-A der Firma KERN & CO. AG, Aarau, Schweiz).

Aufgabe der vorliegenden Erfindung ist es, ein Messsystem für ein Winkelmessgerät mit einem Höhenkreis und digitaler Messwertausgabe anzugeben, welches den Aufwand für eine Recheneinrichtung und einen separaten Neigungsmesser vermeidet und trotzdem bezüglich einer Abweichung der Gerätestehachse von der Zenitrichtung kompensierte digitale Messwerte ausgibt.

Die erfindungsgemässe Lösung dieser Aufgabe ist gekennzeichnet durch einen Höhenkreis mit inkrementaler Teilung, Mittel zur optischen

- 3 -

Abbildung eines Abschnittes der Teilung, sowie einer Nullmarke auf
dem Höhenkreis auf den diametral gegenüberliegenden Teil der Teilung, bzw. auf eine der Nullmarke diametral zugeordnete Abtastmarke,
sowie Mittel zur Ablenkung des Abbildungsstrahlenganges in einer
Richtung parallel zur Höhenkreisebene bei auf die Lotrichtung bezogenen Neigungsänderungen des Winkelmessgerätes.

Dabei sind die Mittel zur Abbildung zweckmässig derart ausgebildet,
dass bei einer Drehung des Höhenkreises die Bilder von Teilungsabschnitt und Nullmarke der Bewegung von diametralem Teilungsabschnitt,
bzw. Abtastmarke entgegenlaufen.

Mit Vorteil sind zur Abbildung und zur Verschiebung des Abbildungsstrahlenganges mindestens teilweise pendelnd aufgehängte Mittel vorgesehen, welche bei einer Neigung des Winkelmessgerätes in einer
Richtung parallel zur Höhenkreisebene die Bilder von Teilungsabschnitt
und Nullmarke auf dem Höhenkreis entgegengesetzt zur Neigungsrichtung
des Winkelmessgerätes verschieben.

Weitere vorteilhafte Ausbildungsmerkmale des Messsystems sind in den
Patentansprüchen 4 bis 7 gekennzeichnet.

Die Erfindung wird nun anhand von in den Zeichnungen schematisch
dargestellten Ausführungsbeispielen näher erläutert. Es zeigen:

Fig. 1 eine Ansicht eines erfindungsgemässen Messsystems mit einem
Höhenkreis, in Richtung der Höhenkreisachse,

Fig. 2 eine Ansicht auf einen Teilschnitt des Messsystems gemäss

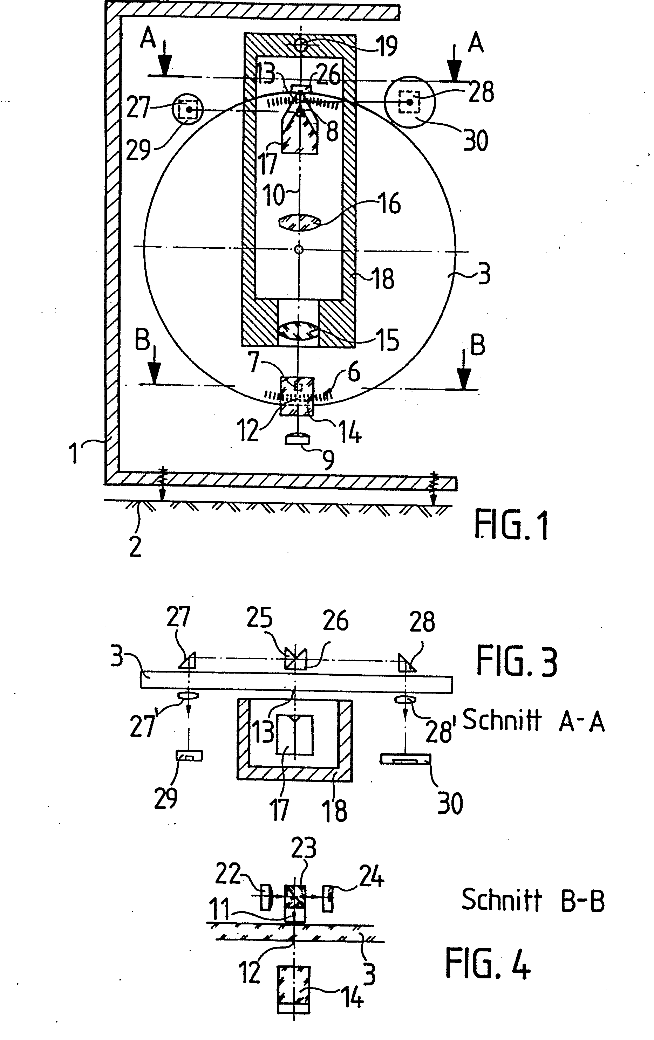

Fig. 1 in Richtung senkrecht zur Höhenkreisachse,

Fig. 3 einen Schnitt A - A durch das Empfängersystem des Messsystems
gemäss Fig. 1,

Fig. 4 einen Schnitt B - B durch das Beleuchtungssystem des Messsystems gemäss Fig. 1,

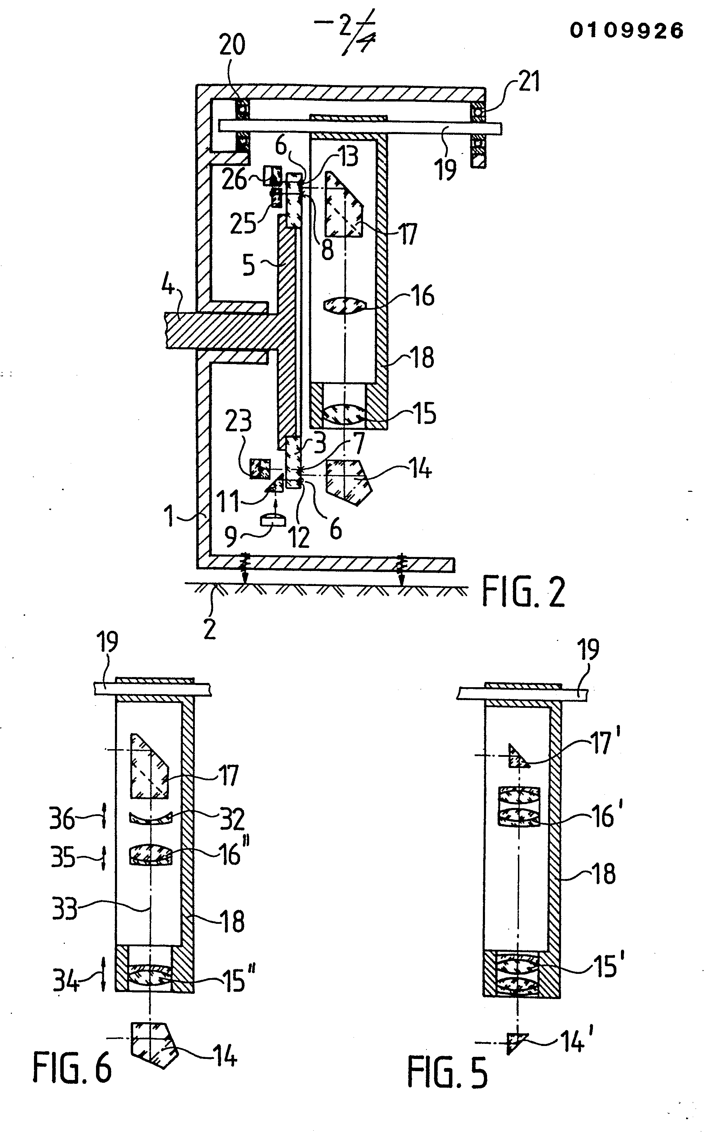

Fig. 5 eine Variante des Abbildungssystems gem. FIG. 2 mit einfachen
Prismen,

Fig. 6 eine andere Variante des Abbildungssystems gem. Fig. 2 mit
Korrekturgliedern und

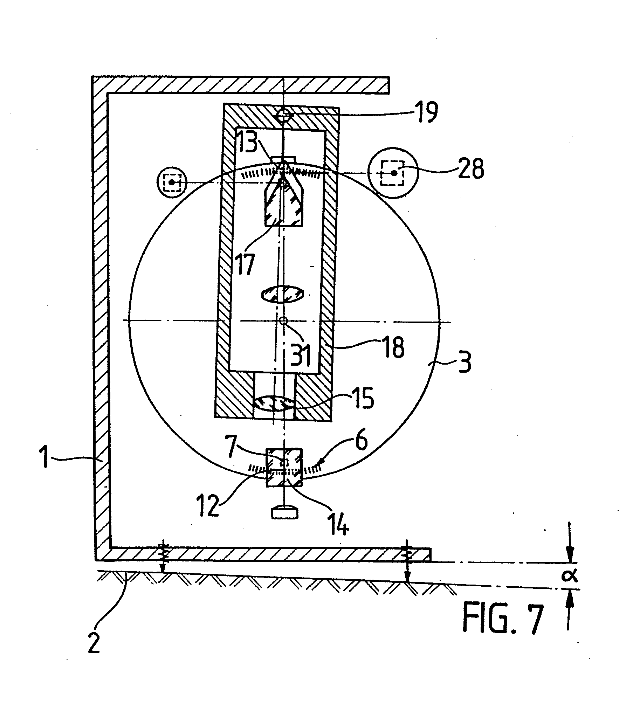

Fig. 7 eine Ansicht des Messsystems gemäss Fig. 1 nach einer Verkippung um einen kleinen Winkel $\alpha$ in der Ebene des Höhenkreises, und

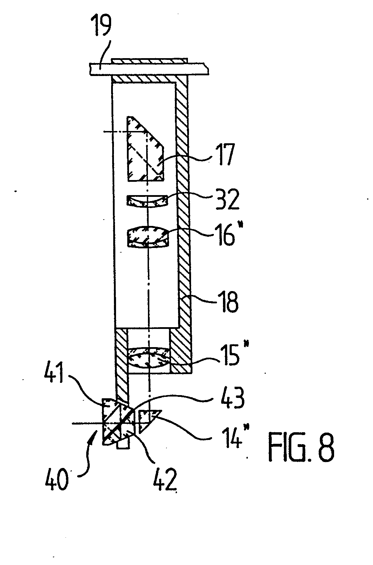

Fig. 8 eine Variante gem. Fig. 6 mit Schmidt-Prisma.

In Fig. 1 ist ein auf einer Basis 2 aufgestelltes Gerätegehäuse 1 im
Schnitt dargestellt. In diesem Gehäuse 1 ist ein Höhenkreis 3 mit einer Achse 4 gelagert, wie dies aus Fig. 2 ersichtlich ist. Mit der
Höhenkreisachse 4 oder Kippachse ist in bekannter Art ein nicht dargestelltes Zielfernrohr verbunden, dessen Höhenwinkel durch die Lage des
Höhenkreises 3 gemessen wird. Der Höhenkreis 3 besteht aus Glas und ist als Kreisring ausgebildet, der über einen Höhenkreisträger 5 mit der Höhenkreisachse 4 verbunden ist. Auf dem transparenten Höhenkreisring 3 ist eine Inkrementalteilung 6 aufgebracht, die sich längs des Umfanges erstreckt und typisch aus 25'000 Teilstrichen besteht. Die Teilstriche verlaufen radial, sind alle gleich breit, opak und durch ebenfalls gleich breite Lücken voneinander getrennt. Neben der Teilung 6 auf einem etwas kürzeren Radius ist eine Nullmarke 7 aufgebracht, die mit einer auf dem selben Höhenkreisdurchmesser gegenüberliegenden Abtastmarke 8 zusammenwirkt. Die Verbindungslinie 10 von Nullmarke 7 und Abtastmarke 8 hat zur Zielachse des mit dem Höhenkreis 3 verbundenen Zielfernrohres eine etwa parallele aber feste Richtungsbeziehung.

Zur Beleuchtung der Inkrementalteilung 6 ist im Gehäuse 1 eine Lichtquelle 9 montiert, deren zur Verbindungslinie 10 parallele kollimierte Strahlung über ein Umlenkprisma 11 auf einen Bereich 12 der Inkrementalteilung 6 gelangt. Der beleuchtete Bereich 12 wird nun auf den ihm diametral gegenüberliegenden Bereich 13 der Inkrementalteilung 6 so abgebildet, dass bei einer Drehung des Höhenkreises 3 um die Achse 4 das im Bereich 13 liegende Bild des Bereiches 12 eine dem Betrag der Bewegung des Bereiches 13 gleiche, aber dieser entgegengerichtete Bewegung erfährt. Zu diesem Zweck ist der Abbildungsstrahlengang vom Bereich 12 über ein Pentaprisma 14, eine erste Linse 15, eine zweite Linse 16 und ein Dachkantprisma 17 auf den Bereich 13 geführt. Die optischen Elemente 14, 16 und 17 sind fest im Gehäuse 1 montiert, die erste Linse 15 jedoch in einem Pendelgehäuse 18, dessen zur Kreisachse 4 parallele Pendelachse 19 mit Lagern 20, 21 im Gehäuse 1 gelagert ist.

Zwischen den Linsen 15, 16 herrscht paralleler Strahlengang, weil der Bereich 12 in der vorderen Brennebene der Linse 15 und der Bereich 13 in der hinteren Brennebene der Linse 16 liegt. Der Abstand des Hauptpunktes der Linse 15 von der Pendelachse 19 ist gleich dem Durchmesser der Inkrementalteilung 6. Der beschriebene Abbildungsstrahlengang ist so ausgeführt, dass auch noch das Zentrum der Nullmarke 7 bei dessen Bewegung durch den Strahlengang auf das Zentrum der Abtastmarke 8 abgebildet wird. Hierfür ist neben der Lichtquelle 9 für die Inkrementalteilung 6 noch eine Lichtquelle 22 vorhanden (Fig. 4). Wie im Schnitt B - B der Fig. 4 gezeigt, befindet sich die Lichtquelle 22 seitlich oberhalb der Lichtquelle 9. Das Licht für die Beleuchtung der Nullmarke 7 wird von der Quelle 22 seitlich über einen Strahlenteiler 23 auf den Bereich des Durchlaufes der Nullmarke 7 umgelenkt. Ein Teil des Beleuchtungslichtes durchläuft den Strahlenteiler 23 geradlinig und gelangt auf einen fotoelektrischen Empfänger 24 zur Ueberwachung der Lichtstärke der Lichtquelle 22.

Bei einer Drehung des Höhenkreises 3 um die Achse 4 bewirkt die gegenläufige Bewegung der Inkrementalteilung 6 im Bereich 13 und des Teilungsbildes aus dem Bereich 12 in an sich bekannter Weise eine periodische Modulation der die Teilung 6 im Bereich 13 durchdringenden Lichtflüsse. Bei Koinzidenz des Bildes der Nullmarke 7 mit der Abtastmarke 8 neben dem Bereich 13 ergibt sich ausserdem ein für die
zur Verbindungslinie 10 definierte Lage des Zielfernrohres charakteristisches Lichtsignal. Dem Bereich 13 sind zwei Umlenkprismen 25,
26 zum seitlichen Herausführen der Lichtsignale nachgeschaltet. Infolge der Teilschnitt-Darstellung der Fig. 2 ist von dem der Achse 4
näher gelegenen Prisma 25 für die Nullmarkensignale nur der hinter
der Zeichnungsebene gelegene kleinere Abschnitt und von Prisma 26
der grössere Abschnitt gezeigt. Wie aus dem Schnitt A - A der Fig. 3
ersichtlich sind den Prismen 25, bzw. 26 zwei weitere Umlenkprismen
27, bzw. 28 nachgeschaltet, von denen Prisma 27 das Licht für die
Nullmarkensignale über eine Abbildungsoptik 27' einem Fotoempfänger
29 und Prisma 28 das Licht für die Inkrementalsignale über eine Abbildungsoptik 28' einem Fotoempfänger 30 zuführt.

Elektrische Schaltungen zur Verarbeitung und Zählung der Ausgangssignale der fotoelektrischen Empfänger 24, 29 und 30 sind an sich
bekannt und deshalb nicht im Einzelnen beschrieben. Da keine besonderen Massnahmen zur Dämpfung des Pendels 18 vorgesehen sind, ist dieses
nur schwach gedämpft. Es wird daher bei schwingendem Pendel gemessen,
und jeder Höhenwinkel-Messwert wird durch bekannte Verfahren der
Mittelwertbildung bestimmt. So wird aus aufeinanderfolgenden Messwerten in den rechten und linken Pendel-Umkehrpunkten ein mittlerer
linker und rechter Wert und als Anzeigewert der Mittelwert aus linkem
und rechtem Wert berechnet. Um dabei momentane Pendelstörungen, z.B.

durch Erschütterungen auszumitteln, wird zur Mittelbildung stets eine Anzahl (z.B. 5) von Messwerten verwendet, wobei jeder neu anfallende Messwert den jeweils vorher verwendeten ältesten Messwert laufend ersetzt. Hierzu kann zweckmässig ein Mikrocomputer Verwendung finden. Beim Durchschlagen des Zielfernrohres passiert die Nullmarke 7 den Bereich 12, wobei durch das entstehende Nullsignal die Zählung der Inkrementalimpulse aus dem Empfänger 30 freigegeben wird. Liegt die Zielrichtung des Fernrohres bei Abgabe des Nullsignales gerade

im Gerätezenit, so wird also die Vertikalrichtung eines anschliessend angezielten Punktes auf diesen Gerätezenit bezogen, d.h. der Winkel zwischen beiden Richtungen inkremental ausgezählt.


Zur Abbildung der Kreisstelle 12 auf die Kreisstelle 13 kann anstelle der bisher beschriebenen Elemente Pentaprisma 14, Linse 15, Linse 16 und Dachkantprisma 17 auch eine Anordnung gemäss Fig. 5 verwendet werden. Hier sind zwei einfache Umlenkprismen 14', 17' und ein Linsensystem 16' gerätefest und ein zweites Linsensystem 15' in einem Pendel 18 mit Achse 19 beweglich angeordnet. Liegt die Hauptebene des Systems 15' wieder im Abstand des Durchmessers der Kreisteilung 6 von der Pendelachse 19 entfernt, so werden die gleichen Bewegungen des Bildes des Teilungsabschnittes 12 erzielt, wie dies im Zusammenhang mit Fig. 1 und Fig. 2 beschrieben wurde.


Eine weitere Variante des optischen Kreisabbildungssystems gem. Fig. 1 und Fig. 2 ist in Fig. 6 dargestellt. Zwischen dem Pentaprisma 14 und

- 9 -

dem Dachkantprisma 17 ist gerätefest ein Achromat 16" und ein Meniskus 32 angeordnet. Ein zweiter Achromat 15" ist im Pendelkörper 18 gefasst. Alle drei Systeme 15", 16" und 32 sind zu Justierzwecken längs des Strahlenganges 33 verschieblich angeordnet, wie dies die Pfeile 34, 35, 36 symbolisieren. Eine Verschiebung des Meniskus 32 längs des Pfeiles 36 bewirkt eine Vergrösserungsänderung des Bildes der Kreisteilungsstelle 12 im Bereich der Kreisteilungsstelle 13 und damit eine Aenderung der Periode der Hell-Dunkel-Verteilung des Moirémusters auf dem Photoempfänger 30. Durch Verschiebung des Achromaten 16" längs des Pfeiles 35 ändert sich die bildseitige Schnittweite und damit die Fokussierung. Durch eine Bewegung des Achromaten 15" längs des Pfeiles 34 kann der Zusammenhang zwischen einem Verkippungswinkel $\alpha$ des Gerätes und dem durch Bewegung des Pendels 18 bewirkten zugehörigen Verschiebungswinkel $\beta$ des Bildes der Kreisstelle 12 verändert werden, wie dies weiter unten zu Fig. 7 beschrieben wird. ( $\beta \approx 2\alpha$ ).

Fig. 7 zeigt das in Fig. 1 dargestellte Messsystem nach dessen Verkippung um einen kleinen, in der Ebene des Höhenkreises 3 liegenden Winkel $\alpha$ . Bei dieser Verkippung hat das Pendelgehäuse 18 mit der Linse 15 seine Lage in Bezug auf die lokale Schwerkraftwirkung beibehalten und daher die Linse 15 relativ zum Abbildungsstrahlengang zwischen den Prismen 14 und 17 verschoben. Wegen des Abstandes des Hauptpunktes der Linse 15 von der Pendelachse 19 (gleich dem Durchmesser der Inkrementalteilung 6) ist diese Linsenverschiebung gerade so gross, dass das Bild des Teilungsabschnittes 12 um einen auf das
Kreiszentrum 31 bezogenen Winkel $2\alpha$ entgegen der Gerätekippung,
also auf das Umlenkprisma 28 zu verschoben wurde. Bei einer dem
Teilungsabschnitt 12 fast gleichen Lage der in Koinzidenz befindlichen Nullmarke 7 wäre deren Bild ebenfalls um fast $2\alpha$ mit dem Bild
des Abschnittes 12 mitgewandert.

War das Zielfernrohr vor der Gerätekippung auf ein Ziel mit dem
Höhenwinkel h (Zenitdistanz h) gerichtet, so ändert sich die Anzeige des Messsystems durch die Gerätekippung (einschliesslich Fernrohr) auf einen Wert $h - \alpha$ . Wird nun das Zielfernrohr wieder auf
das alte Ziel gerichtet, so erscheint wieder die nun bezüglich der
Gerätekippung kompensierte alte Zenitdistanz h in der Anzeige. Wurde
aber das Messsystem von vornherein um $\alpha$ schief aufgestellt, so wird
erfindungsgemäss das die Winkelzählung auslösende Nullsignal nicht
mehr beim Durchgang des Zielfernrohres durch den Gerätezenit erzeugt,
sondern beim Durchgang durch eine um etwa $\alpha$ verschobene Richtung,
also durch den schwerkraft-definierten Zenit. Damit ist auch der Bezugspunkt für die Höhenwinkel-Messung beim ersten Einschalten nach
der Geräteaufstellung bezüglich einer Geräteschiefe kompensiert.

Durch die beschriebene Verschiebung der Linse 15 wandert zwar das
Bild des Teilungsabschnittes 12 von seiner Lage auf dem Bereich 13
um einen auf das Kreiszentrum 31 bezogenen Winkel $2\alpha$ auf das Umlenkprisma 28 hin aus, behält aber dabei die Orientierung des

- 10 a -

Teilungsabschnittes 12 bei. Am Ort der neuen Bildlage hat sich jedoch die Orientierung der Kreisteilung 6 um $2\alpha$ geändert, sodass das Bild des Teilungsabschnittes 12 gegen die Kreisteilung 6 um $2\alpha$ verdreht ist. Diese Verdrehung verursacht einen Kompensationsfehler, der mit wachsendem Verkippungswinkel $\alpha$ immer grösser wird und für gewisse Anwendungen stört.

Fig. 8 zeigt eine Ausführungsform des Messystems, bei der sich die Orientierung des Bildes des Teilungsabschnittes 12 bei dessen Auswandern mit der Orientierung der Kreisteilung 6 mitdreht. Das wird dadurch erreicht, dass der Abbildungsstrahlengang vom Teilungsabschnitt 12 her vor der Umlenkung durch das Umlenkprisma 14" ein Schmidt-Prisma 40 (vgl. H. Naumann, Optik für Konstrukteure, Knapp-Verlag Düsseldorf, 1960, Seite 73) durchläuft, welches am gleichen Pendelgehäuse 18 wie die Linse 15" befestigt ist und sich mit dieser zusammen verschiebt. Das Schmidt-Prisma 40 besteht, wie aus Fig. 8 ersichtlich aus zwei Teilprismen 41, 42, die durch einen Luftspalt 43 getrennt angeordnet sind. Die Längsausdehnung des Prismas 40 senkrecht zur Zeichenebene ist hinreichend gross, damit der Abbildungsstrahlengang auch bei Pendelverschiebungen stets das Prisma 40 durchsetzen kann.

Patentansprüche

1. Messsystem für ein Winkelmessgerät mit einem Höhenkreis (3) und digitaler Messwertausgabe, gekennzeichnet durch einen Höhenkreis (3) mit inkrementaler Teilung (6), Mittel (14 - 17) zur optischen Abbildung eines Abschnittes (12) der Teilung (6), sowie einer Nullmarke (7) auf dem Höhenkreis (3) auf den diametral gegenüberliegenden Teil (13) der Teilung (6), bzw. auf eine der Nullmarke (7) diametral zugeordnete Abtastmarke (8), sowie Mittel (15, 18, 19) zur Ablenkung des Abbildungsstrahlenganges in einer Richtung parallel zur Höhenkreisebene bei auf die Lotrichtung bezogenen Neigungs-änderungen des Winkelmessgerätes.

2. Messsystem nach Anspruch 1, gekennzeichnet durch Mittel (14 - 17) zur Abbildung, derart, dass bei einer Drehung des Höhenkreises (3) die Bilder von Teilungsabschnitt (12) und Nullmarke (7) der Bewegung von diametralem Teilungsabschnitt (13), bzw. Abtastmarke (8) entgegenlaufen.

3. Messsystem nach Anspruch 2, gekennzeichnet durch mindestens teilweise pendelnd aufgehängte Mittel (15) zur Abbildung und zur Verschiebung des Abbildungsstrahlenganges, welche bei einer Neigung des Winkelmessgerätes in einer Richtung parallel zur Höhenkreisebene die Bilder von Teilungsabschnitt (12) und Nullmarke (7) auf dem Höhenkreis (3) entgegengesetzt zur Neigungsrichtung des Winkel-

messgerätes verschieben.

4. Messsystem nach Anspruch 3, gekennzeichnet durch Mittel (14 - 19) zur Abbildung und Verschiebung, welche bei einer Neigung des Winkelmessgerätes um einen Winkel $\alpha$ die Bilder von Teilungsabschnitt (12) und Nullmarke (7) auf dem Höhenkreis (3) um einen auf das Kreiszentrum (31) bezogenen, doppelt so grossen Winkel $2\alpha$ verschieben.

5. Messsystem nach Anspruch 3, gekennzeichnet durch Mittel zur Abbildung und Verschiebung, welche zwei Strahlumlenker (14, 14', 17, 17') zur Führung des Abbildungsstrahlenganges parallel zur Höhenkreisebene und zwei zwischen den Strahlumlenkern im Strahlengang angeordnete optische Systeme (15, 15', 15", 16, 16', 16", 32) umfassen, deren entsprechende Hauptebenen zu dem ihnen jeweils näher gelegenen Teilungsabschnitt (12, bzw. 13) einen ihrer Brennweite gleichen optischen Abstand haben, und von denen ein System (15, 15', 15") um eine zur Höhenkreisachse (4) parallele Achse (19) in einem dem Durchmesser der Teilung (6) gleichen Abstand pendelnd aufgehängt ist.

6. Messsystem nach Anspruch 5, gekennzeichnet durch ein Pentaprisma (14) und ein Dachkantprisma (17) als Strahlumlenker.

7. Messsystem nach Anspruch 5, gekennzeichnet durch optisch-elektronische Mittel zur Umsetzung des aus der Abbildung der Inkrementalteilung (6) auf sich selbst resultierenden Moirébildes in eine
digitale Messwertausgabe, wobei eine Zählung von aus dem Moirébild
abgeleiteten Inkrementalimpulsen erst nach dem, nach Einschalten
des Gerätes erstmaligen Auftreten eines aus der Nullmarke (7, 8)
abgeleiteten Nullimpulses freigegeben wird.

8. Messystem nach Anspruch 5, gekennzeichnet durch ein Schmidt-Prisma
(40), welches im Abbildungsstrahlengang zwischen dem ersten Abschnitt (12) der Teilung (6) bzw. der Nullmarke (7) und dem ersten
Strahlumlenker (14") um die zur Höhenkreisachse (4) parallele Achse
(19) pendelnd aufgehängt ist.

0109926

FIG.1

FIG.3

Schnitt A-A

Schnitt B-B

FIG. 4

FIG. 2

FIG. 6

FIG. 5

FIG. 7

-4/1

0109926

19
17
32
16"
18
15"
41
43
14"
40
42

FIG. 8